# EUROPÄISCHE PATENTSCHRIFT

(11) **EP 1 784 029 B1**
(45) Veröffentlichungstag und Bekanntmachung des Hinweises auf die Patenterteilung: **11.02.2009**
(21) Anmeldenummer: 05024343.5
(22) Anmeldetag: 08.11.2005
(51) Int. Cl.: H04W 88/08

(54) **Verfahren zum Kodieren von Sprachdaten in einem Funkzugangsnetz sowie Vorrichtung**
Method of coding voice data in a radio access network and corresponding device
Procédé de codage de données vocales dans un réseau d'accès radio et dispositif

(43) Veröffentlichungstag der Anmeldung: 09.05.2007
(73) Patentinhaber: Nokia Siemens Networks GmbH & Co. KG, 81541 München (DE)
(72) Erfinder: Brenner, Jörg, 22303 Hamburg (DE); Dembski-Minssen, Ricklef, 27419 Sittensen (DE); Schwenke, Dirk, 21129 Hamburg (DE); Wolff, Florian, 21073 Hamburg (DE); von der Heide, Stefan, 22846 Norderstedt (DE)

(56) Entgegenhaltungen:
- GB-A- 2 227 393
- US-A- 5 999 813
- MOULY M ET AL: "TRANSMISSION" GSM SYSTEM FOR MOBILE COMMUNICATIONS, LASSAY-LES-CHATEAUX, EUROPE MEDIA, FR, 1993, Seiten 124-185, XP000860003
- "Digital cellular telecommunications system (Phase 2+); Universal Mobile Telecommunications System (UMTS); AMR speech Codec; Interface to Iu and Uu (3GPP TS 26.102 version 5.2.0 Release 5); ETSI TS 126 102" ETSI STANDARDS, EUROPEAN TELECOMMUNICATIONS STANDARDS INSTITUTE, SOPHIA-ANTIPO, FR, Bd. 3-SA4, Nr. V520, März 2003 (2003-03), XP014009292 ISSN: 0000-0001

## Beschreibung

Die Erfindung betrifft Verfahren zum Betrieb von Vorrichtungen zum Kodieren von Sprachdaten in einem Funkzugangsnetz eines Funkkommunikationssystems sowie entsprechende Vorrichtungen.

In Funkzugangsnetzen von Funkkommunikationssystemen dienen Funkstationen zum Senden und Empfangen von Daten, beispielsweise Sprachdaten, an und von Teilnehmerstationen. Zum Steuern von Datenübertragungen mit den Teilnehmerstationen ist jede Funkstation mit einer Funksteuerung verbunden. Bei der Übertragung von Sprachdaten werden die Sprachdaten mit einem Sprachcodec kodiert und in dieser kodierten Form über eine Luftschnittstelle zwischen Teilnehmerstationen und Funkstationen übertragen.

Bei einem Verbindungsaufbau werden Signalisierungsdaten zwischen einer Teilnehmerstation und einer zur Funkversorgung der Teilnehmerstation vorgesehenen Funkstation sowie der entsprechenden Funksteuerung ausgetauscht. Die Signalisierungsdaten dienen beispielsweise dazu, einen Sprachcodec festzulegen, der nachfolgend für Sprachübertragungen verwendet wird. Von einer Teilnehmerstation gesendete Sprachdaten werden in der Teilnehmerstation mit dem Sprachcodec kodiert, an die Funkstation gesendet und von dort an die entsprechende Funksteuerung weitergeleitet. In der Funksteuerung erfolgt eine Umkodierung (engl.: transcoding) der Sprachdaten in einen anderen Sprachcodec, der zum Weiterleiten der Sprachdaten an ein an die Funksteuerung angeschlossenes Kernnetz benötigt wird. In der umgekehrten Übertragungsrichtung, d.h. bei Sprachdaten, die aus dem Kernnetz kommend zur Teilnehmerstation übertragen werden, erfolgt in der Funksteuerung in einer Transkodiereinheit eine Umkodierung des empfangenen Sprachcodec in denjenigen Sprachcodec, der zuvor mit der Teilnehmerstation festgelegt wurde.

Beim Festlegen eines Sprachcodec für Sprachdatenübertragungen mit der Teilnehmerstation wird berücksichtigt, welche Sprachcodecs die Teilnehmerstation unterstützt. Es werden nur diejenigen Sprachcodecs verwendet, die von der Teilnehmerstation unterstützt werden. Dabei wird üblicherweise derjenige von der Teilnehmerstation unterstützte Sprachcodec ausgewählt, der eine möglichst bandbreiteneffiziente Ausnutzung der Luftschnittstelle ermöglicht Report of the 3GPP TSG-N WG1 MM/CC/SM LUD/Meeting #7, 13-17 September 1999, Makuhari, Japan, ftp://ftp.3gpp.org/TSG-CN/WG1- mm - cc- sm/TSGN1- 07/Documents.

Bei der Weiterentwicklung eines Funkstandards eines Funkkommunikationssystems ist eine wichtige Eigenschaft die Abwärtskompatibilität. Dies bedeutet, dass auch Teilnehmerstationen, die konform mit einer ersten älteren Version des Funkstandards sind, in einer zweiten neueren Version funktionsfähig sein müssen. Dies kann beispielsweise bedeuten, dass das Funkkommunikationssystem mit einer neuen Version des Funkstandards einen Sprachcodec unterstützt, der von Teilnehmerstationen gemäß einer älteren Version nicht unterstützt wird. Dadurch, dass für Sprachübertragungen aber derjenige Sprachcodec zu wählen ist, der auch von einer Teilnehmerstation unterstützt wird, ist ein Betreiber eines Funkkommunikationssystems in der Flexibilität der Wahl des verwendeten Sprachcodec eingeschränkt und kann somit bei der Festlegung eines verwendeten Sprachcodec unter Umständen nicht berücksichtigen, welche Bandbreite beispielsweise für Übertragungen von Funkstationen zu Funksteuerungen zur Verfügung steht.

Aus der US 5999813 A ist ein Funkkommunikationssystem bekannt, bei dem eine TRAU (transcoder-rate adapter unit) zur Ratenkonvertierung oder zur Ratenanpassung in einer Basisstation (BTS) und optional in einer Funksteuerung (BSC) angeordnet wird.

Es ist daher Aufgabe der vorliegenden Erfindung, Verfahren sowie entsprechende Vorrichtungen anzugeben, mittels derer eine größere Flexibilität beim Verwenden eines Sprachcodec innerhalb eines Funkzugangsnetzes eines Funkkommunikationssystems erreicht werden kann.

Diese Aufgabe wird gelöst durch die erfindungsgemäßen Verfahren sowie die erfindungsgemäßen Vorrichtungen gemäß den unabhängigen Ansprüchen.

Aus- und Weiterbildungen der Erfindung sind Gegenstand abhängiger Ansprüche.

Bei einem erfindungsgemäßen Verfahren zum Betrieb einer Vorrichtung zum Kodieren von Sprachdaten in einem Funkzugangsnetz eines Funkkommunikationssystems empfängt die Vorrichtung von einer Funkstation mit einem ersten Sprachcodec kodierte Sprachdaten, transkodiert die kodierten Sprachdaten in einen zweiten Sprachcodec und überträgt die mit dem zweiten Sprachcodec kodierten Sprachdaten an eine zum Steuern der Übertragung der Sprachdaten verwendeten Funksteuerung. Erfindungsgemäß empfängt die Vorrichtung Signalisierungsdaten, die in dem Funkkommunikationssystem zwischen der Funksteuerung und einer mit der Funkstation über eine Luftschnittstelle verbundenen Teilnehmerstation und/oder zwischen der Funksteuerung und der Funkstation übertragen und zum Festlegen des ersten Sprachcodec für Sprachdaten der Teilnehmerstation verwendet werden, und modifiziert die Signalisierungsdaten derart, dass die Signalisierungsdaten der Teilnehmerstation den ersten Sprachcodec und der Funksteuerung den zweiten Sprachcodec signalisieren.

Auf diese Weise können Funkstationen und Funksteuerungen, die bereits in zum Betrieb in einem Funkkommunikationssystem ohne die erfindungsgemäße Vorrichtung vorgesehen sind und die daher ohne die Vorrichtung die Sprachdaten direkt miteinander in dem Sprachcodec austauschen, der bei einem Verbindungsaufbau mit der entsprechenden Teilnehmerstation festgelegt wurde, für das erfindungsgemäße Verfahren verwendet werden, ohne modifiziert zu werden. Die Vorrichtung nimmt nämlich gegenüber der Teilnehmerstation die Funktionalität einer Funksteuerung und gegenüber der Funksteuerung die Funktionalität einer Teilnehmerstation wahr.

Bei einem alternativen erfindungsgemäßen Verfahren zum Betrieb einer Vorrichtung zum Kodieren von Sprachdaten in einem Funkzugangsnetz eines Funkkommunikationssystems empfängt die Vorrichtung von einer Funkstation mit einem ersten Sprachcodec kodierte Sprachdaten, transkodiert die kodierten Sprachdaten in einen zweiten Sprachcodec und überträgt die mit dem zweiten Sprachcodec kodierten Sprachdaten an eine zum Steuern der Übertragung der Sprachdaten verwendeten Funksteuerung. Erfindungsgemäß ist vorgesehen, dass von der Vorrichtung mit dem zweiten Sprachcodec an die Funksteuerung übertragene Sprachdaten zuerst von einer weiteren Vorrichtung empfangen, in den ersten Sprachcodec transkodiert und erst danach an die Funksteuerung weitergeleitet werden.

Auf diese Weise kann darauf verzichtet werden, dass die Vorrichtung wie zuvor beschrieben Signalisierungsdaten modifiziert, die zum Festlegen eines Sprachcodec verwendet werden. Das Festlegen eines Sprachcodec erfolgt bei einem Verbindungsaufbau wie bereits in der Beschreibungseinleitung beschrieben und Funksteuerung und Teilnehmerstation legen beispielsweise den ersten Sprachcodec fest. Die Vorrichtung transkodiert Sprachdaten des ersten Sprachcodec in den zweiten Sprachcodec, überträgt die kodierten Sprachdaten an die weitere Vorrichtung und dort werden die Sprachdaten wiederum in den ersten Sprachcodec zurück transkodiert, so dass die Transkodierung in den zweiten Sprachcodec sowohl für die Teilnehmerstation als auch für die Funksteuerung transparent ist. Diese doppelte Transkodierung kann somit ebenfalls vorteilhaft eingesetzt werden, wenn beispielsweise bei einer Ausnutzung einer Satellitenübertragung zur Datenübertragung zwischen einer Funksteuerung und einer Funkstation ein anderer Sprachcodec von Vorteil ist, als der Sprachcodec, den die Teilnehmerstation unterstützt oder der für die verfügbare Bandbreite der Funkübertragung mit der Funkstation vorteilhaft ist. Allerdings ist für diese Ausgestaltung hinsichtlich der Ausgestaltung ohne weitere Vorrichtung eine zusätzliche Transkodierung erforderlich, die eine weitere Verzögerung der Übertragung der Sprachdaten bewirkt, so dass die erste genannte Ausgestaltung der Erfindung zu bevorzugen wären. Die Ausgestaltung ohne weitere Vorrichtung ist auch aufgrund des geringeren Implementierungsaufwandes aus kommerziellen Gründen die bevorzugte Ausgestaltung der Erfindung.

Die Erfindung ermöglicht, dass Sprachdaten, die die Funkstation von einer Teilnehmerstation über eine Luftschnittstelle mit einem ersten Sprachcodec empfängt, der von der Teilnehmerstation unterstützt wird, von der Vorrichtung in einen zweiten Sprachcodec transkodiert werden, der beispielsweise nicht von der Teilnehmerstation unterstützt wird, und dann mit diesem zweiten Sprachcodec von der Vorrichtung an die Funksteuerung übertragen werden, die zum Steuern der Übertragung der Sprachdaten zwischen der Funkstation und der Teilnehmerstation verwendet wird. Auf diese Weise kann beispielsweise als zweiter Sprachcodec ein Sprachcodec verwendet werden, der an eine auf einer Verbindung zwischen der Funkstation und der Funksteuerung zur Verfügung stehenden Bandbreite angepasst ist. Beispielsweise kann die Bandbreite auf der Verbindung zwischen Funkstation und Funksteuerung geringer sein als die Bandbreite auf der Luftschnittstelle zwischen der Teilnehmerstation und der Funkstation. Erfindungsgemäß kann dann ein Sprachcodec mit einer geringeren Datenrate als zweiter Sprachcodec verwendet werden, selbst dann, wenn die Teilnehmerstation den zweiten Sprachcodec selbst nicht unterstützt.

In einer Ausgestaltung der Erfindung erfolgt eine weitere Transkodierung der Sprachdaten beispielsweise mit einem dritten Sprachcodec in der Funksteuerung. Von dort werden die Sprachdaten mit dem dritten Sprachcodec (z.B. mit PCM [Pulse Code Modulation]) an Einrichtungen eines Kernnetzes weitergeleitet, um von dort beispielsweise an eine Station, die für den Empfang der Sprachdaten vorgesehen ist, weitergeleitet zu werden.

Eine bevorzugte Ausgestaltung der Erfindung sieht vor, dass die mit dem zweiten Sprachcodec kodierten Sprachdaten zumindest teilweise über eine Luftschnittstelle an die Funksteuerung übertragen werden.

Beispielsweise in Funkkommunikationssystemen, in denen Funkstationen in Flugzeugen angeordnet sind, erfolgt eine Weiterleitung von Sprachdaten, die die Funkstationen in den Flugzeugen von dort betriebenen Teilnehmerstationen empfangen, über eine Satellitenverbindung an eine Funksteuerung des terrestrischen Teils des Funkzugangsnetzes des Funkkommunikationssystems. Auch in der umgekehrten Richtung wird die Satellitenverbindung zur Weiterleitung von Sprachdaten an die Teilnehmerstationen in den Flugzeugen verwendet. Eine derartige Verbindung mittels Satelliten verfügt über eine vergleichsweise geringe Bandbreite von beispielsweise 64kBit/s, die sich mehrere (z.B. sieben) Teilnehmerstationen mit ihren Signalisierungs- und Sprachdaten sowie Datendiensten teilen müssen), so dass auf dieser Übertragungsstrecke ein anderer Sprachcodec verwendet werden kann als der Sprachcodec, den die Teilnehmerstationen in den Flugzeugen zur Kommunikation mit wenigstens einer dort angeordneten Funkstation verwenden.

Beispielsweise verwenden die Teilnehmerstationen in einem Funkkommunikationssystem gemäß dem GSM-Standard (GSM: Global System for Mobile Communications) als Sprachcodec GSM-Full Rate mit 13 kBit/s. Dieser Sprachcodec wird von einer Vorrichtung, die beispielsweise in der Funkstation im Flugzeug angeordnet ist, in den zweiten Sprachcodec, beispielsweise in AMR (Adaptive Multirate) mit 4,75 kBit/s transkodiert. Mit dem zweiten Sprachcodec können die Sprachdaten dann über die Satellitenverbindung an die am Boden angeordnete Funksteuerung gesendet werden. In der Funksteuerung werden die Sprachdaten dann beispielsweise in PCM transkodiert und zur weiteren Übertragung einem angeschlossenen Kernnetz zugeführt.

Die erfindungsgemäßen Vorrichtungen weisen alle Merkmale auf, die zur Durchführung der erfindungsgemäßen Verfahren benötigt werden. Insbesondere können entsprechende Mittel zur Durchführung der einzelnen Verfahrensschritte oder Verfahrensvarianten vorgesehen sein.

Die Vorrichtung kann als separate Einheit betrieben werden, die über eine beispielsweise elektrische oder optische Leitung mit einer herkömmlichen Funkstation verbunden und beispielsweise ebenfalls in dem Flugzeug angeordnet ist. Selbstverständlich kann alternativ die Vorrichtung auch in eine neu zu konstruierende Funkstation integriert werden.

Die Erfindung wird im Folgenden anhand von in den Figuren dargestellten Ausführungsbeispielen näher erläutert. Es zeigen:
- Fig. 1: eine erste bevorzugte Ausgestaltung der Erfindung mit einer zwischen einer Funkstation und einer zugehörigen Funksteuerung angeordneten erfindungsgemäßen Vorrichtung zum Durchführen einer erfindungsgemäßen Transkodierung, und
- Fig. 2: eine weitere Ausgestaltung der Erfindung mit einer weiteren Vorrichtung, die zwischen der Vorrichtung und der Funksteuerung angeordnet wird, um eine weitere erfindungsgemäße Transkodierung durchzuführen.

Gleiche Bezugszeichen in den Figuren bezeichnen gleiche Gegenstände.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Eine Funkstation ist beispielsweise eine Basisstation eines Funkkommunikationssystems, die von einer Teilnehmerstation Nutz- und/oder Signalisierungsdaten empfängt und/oder Nutz- und/oder Signalisierungsdaten an die Teilnehmerstation sendet. Eine Basisstation ist über netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen. Eine netzseitige Einrichtung ist beispielsweise eine Funksteuerung, die zum Steuern von Funkübertragungen zwischen der Basisstation und Teilnehmerstationen dient. Die Verbindung zwischen der Basisstation und einer Funksteuerung kann sowohl über eine Luftschnittstelle, beispielsweise eine Satellitenverbindung, oder leitungsgebunden über eine beispielsweise elektrische oder optische Verbindung erfolgen.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Mit Vorteil kann die Erfindung eingesetzt werden, wenn eine Funkstation in einem Flugzeug angeordnet ist und über eine Satellitenverbindung mit einer terrestrischen Funksteuerung verbunden ist.

Im Folgenden wird die Erfindung am Beispiel eines Mobilfunksystems nach dem GSM-Standard beschrieben, ohne jedoch damit zum Ausdruck bringen zu wollen, dass die Erfindung hierauf beschränkt sein soll.

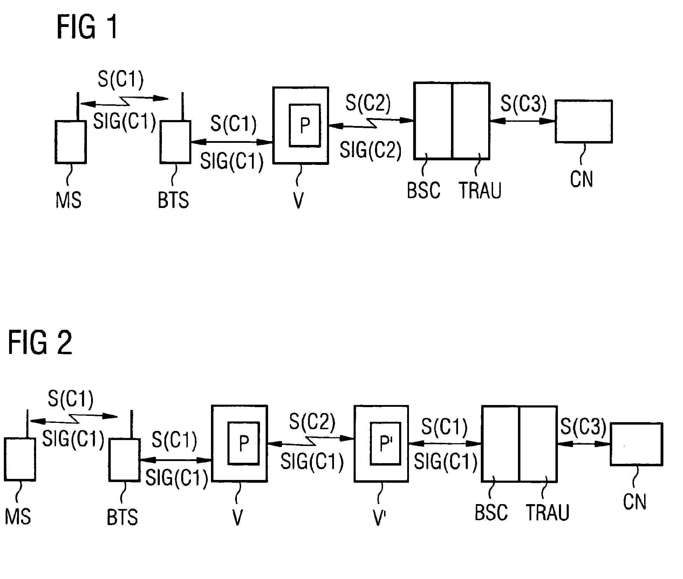

Figur 1 zeigt schematisch eine Teilnehmerstation MS, die über eine Luftschnittstelle Signalisierungsdaten SIG an eine Funkstation BTS sendet, um eine Funkverbindung mit der Funkstation BTS aufzubauen. In den Signalisierungsdaten sind neben weiteren Daten, die zum Aufbau einer Funkverbindung beispielsweise gemäß dem GSM-Standard benötigt werden, auch Informationen enthalten, die dem Funkkommunikationssystem anzeigen, dass die Teilnehmerstation einen ersten Sprachcodec C1 unterstützt und Sprachdaten mit diesem Sprachcodec kodiert zu übertragen und zu empfangen wünscht. Die Funkstation BTS überträgt die Signalisierungsdaten SIG über eine beispielsweise mit einer elektrischen oder einer optischen Leitung mit der Funkstation BTS verbundenen Vorrichtung V an eine Funksteuerung BSC.

Bei der Teilnehmerstation MS handelt es sich beispielsweise um ein Mobiltelefon, das in einem Flugzeug betrieben wird. Die Funkstation BTS sowie die Vorrichtung V sind in diesem Fall ebenfalls in dem Flugzeug angeordnet.

In dem Ausführungsbeispiel zu Figur 1 erfolgt ein Datenaustausch zwischen der Vorrichtung V und der Funksteuerung BSC über eine Luftschnittstelle, beispielsweise eine Satellitenverbindung. Für die Übertragung über die Luftschnittstelle zwischen der Vorrichtung V und der Funksteuerung BSC ist für die dort zur Verfügung stehende Bandbreite eine Übertragung mit einem zweiten Sprachcodec C2 günstiger als die Übertragung mit dem ersten Sprachcodec C1. Die Vorrichtung V sendet daher die Signalisierungsdaten SIG über die Luftschnittstelle weiter an die Funksteuerung BSC, signalisiert aber, dass der zweiter Sprachcodec C2 der von der Teilnehmerstation gewünschte Sprachcodec ist. Mittels weiterer aus Gründen der Übersichtlichkeit nicht dargestellter Signalisierungsdaten wird für die Teilnehmerstation MS eine Funkverbindung aufgebaut und die Verwendung des ersten Sprachcodec C1 festgelegt. Die Vorrichtung V sorgt in diesem Fall durch die modifizierten Signalisierungsdaten SIG dafür, dass die Funksteuerung BSC davon ausgeht, dass für die Übertragung das Verwenden des zweiten Sprachcodec C2 festgelegt wurde, während die Vorrichtung der Teilnehmerstation gleichzeitig signalisiert, dass das Verwenden des ersten Sprachcodec C1 festgelegt wurde.

Die Funkstation BTS empfängt daher nachfolgend Sprachdaten S mit dem ersten Sprachcodec C1 von der Teilnehmerstation MS, leitet diese Sprachdaten S an die Vorrichtung V weiter. In der Vorrichtung V werden die Sprachdaten S in den zweiten Sprachcodec C2 transkodiert und beispielsweise über die Satellitenverbindung an die Funksteuerung BSC gesendet. In der Funksteuerung BSC oder mit dieser verbunden ist eine Transkodiereinheit TRAU angeordnet, die die mit dem zweiten Sprachcodec C2 empfangenen Sprachdaten in einen dritten Sprachcodec C3 transkodiert und mit dem dritten Sprachcodec C3 an ein Kernnetz CN weiterleitet, das an die Funksteuerung BSC angeschlossen ist. Von dort erfolgt beispielsweise das Weiterleiten der Sprachdaten S an eine nicht dargestellte Station, mit der die Teilnehmerstation MS kommuniziert. In gleicher Weise werden Sprachdaten, die für die Teilnehmerstation zum Empfang vorgesehen sind, von der Funksteuerung BSC mit dem zweiten Sprachcodec C2 an die Vorrichtung V gesendet, dort in den ersten Sprachcodec C1 transkodiert, an die Funkstation BTS weitergeleitet und von dort über die Luftschnittstelle mit dem ersten Sprachcodec C1 an die Teilnehmerstation MS gesendet.

Selbstverständlich kann die Erfindung auch vorteilhaft zum Einsatz kommen, wenn alle beteiligten Komponenten auf der Erde angeordnet sind und/oder wenn zwischen der Vorrichtung und der Funksteuerung eine leitungsgebundene Verbindung vorliegt.

In einem alternativen Ausführungsbeispiel in Figur 2 sind schematisch die gleichen Stationen und Vorrichtungen dargestellt wie in Figur 1. Die Übertragung der Sprachdaten S erfolgt in gleicher Weise zwischen der Teilnehmerstation MS und der Vorrichtung V wie zuvor anhand von Figur 1 beschrieben. Zusätzlich ist zwischen der Vorrichtung V und der Funksteuerung BSC eine weitere Vorrichtung V' angeordnet. Die weitere Vorrichtung V' dient dazu, Sprachdaten, die die weitere Vorrichtung V' von der Vorrichtung V mit dem zweiten Sprachcodec C2 empfängt, in den ersten Sprachcodec C1 zu transkodieren und an die Funksteuerung BSC weiterzuleiten. Ebenso werden Sprachdaten, die für die Teilnehmerstation MS bestimmt sind, von der Funksteuerung BSC mit dem ersten Sprachcodec C1 an die weitere Vorrichtung V' gesendet, dort in den zweiten Sprachcodec C2 transkodiert und an die Vorrichtung V übertragen. Die Übertragung zwischen der Vorrichtung V und der weiteren Vorrichtung V' ist in diesem Fall ebenfalls eine Übertragung über eine Luftschnittstelle, beispielsweise über die bandbreitenbegrenzte Satellitenverbindung, die gemäß Figur 1 zwischen der Vorrichtung V und der Funksteuerung verwendet wird.

Bei einem Verbindungsaufbau erfolgt somit wie anhand von Figur 1 beschrieben eine Signalisierung der Teilnehmerstation MS mittels Signalisierungsdaten SIG, dass sie den ersten Sprachcodec C1 verwenden möchte. Die Signalisierungsdaten SIG werden ohne modifiziert zu werden über die Vorrichtung V und die weitere Vorrichtung V' an die Funksteuerung BSC weitergeleitet, und es wird zwischen der Funksteuerung und der Teilnehmerstation MS festgelegt, dass beide den ersten Sprachcodec C1 zum Senden von Sprachdaten verwenden. Die Vorrichtung V sowie die weitere Vorrichtung V' müssen somit keine Signalisierungsdaten modifizieren, sondern sie setzen den ersten Sprachcodec C1 transparent für die Teilnehmerstation MS und die Funksteuerung BSC in den zweiten Sprachcodec C2 um.

Die Übertragung der Sprachdaten S gemäß dem alternativen Ausführungsbeispiel aus Figur 2 unterscheidet sich somit gegenüber dem Ausführungsbeispiel aus Figur 1 lediglich durch das Hinzufügen der weiteren Vorrichtung V', die eine zusätzliche Transkodierung vom zweiten Sprachcodec C2 in den ersten Sprachcodec C1 und umgekehrt zwischen der Vorrichtung V und der Funksteuerung BSC bewirkt. In der Funksteuerung BSC werden die Sprachdaten S vom ersten Sprachcodec C1 in den dritten Sprachcodec C3 transkodiert und an das Kernnetz weitergeleitet.

## Patentansprüche

1. Verfahren zum Betrieb einer Vorrichtung (V) zum Kodieren von Sprachdaten (S) in einem Funkzugangsnetz eines Funkkommunikationssystem, bei dem
- die Vorrichtung (V) von einer Funkstation (BTS) mit einem ersten Sprachcodec (C1) kodierte Sprachdaten (S) empfängt,
- die kodierten Sprachdaten (S) von der Vorrichtung (V) in einen zweiten Sprachcodec (C2) transkodiert werden,
- und die mit dem zweiten Sprachcodec (C2) kodierten Sprachdaten (S) an eine zum Steuern der Übertragung der Sprachdaten verwendeten Funksteuerung (BSC) übertragen werden,
**dadurch gekennzeichnet,**
**dass** die Vorrichtung (V) Signalisierungsdaten (SIG), die in dem Funkkommunikationssystem zwischen der Funksteuerung (BSC) und einer mit der Funkstation (BTS) über eine Luftschnittstelle verbundenen Teilnehmerstation (MS) und/oder zwischen der Funksteuerung (BSC) und der Funkstation (BTS) übertragen und zum Festlegen des ersten Sprachcodecs (C1) für Sprachdaten (S) der Teilnehmerstation (MS) verwendet werden, empfängt und derart modifiziert, dass die Signalisierungsdaten (SIG) der Teilnehmerstation (MS) den ersten Sprachcodec (C1) und der Funksteuerung (BSC) den zweiten Sprachcodec (C2) signalisieren.

2. Verfahren zum Betrieb einer Vorrichtung (V) zum Kodieren von Sprachdaten (S) in einem Funkzugangsnetz eines Funkkommunikationssystem, bei dem
- die Vorrichtung (V) von einer Funkstation (BTS) mit einem ersten Sprachcodec (C1) kodierte Sprachdaten (S) empfängt,
- die kodierten Sprachdaten (S) von der Vorrichtung (V) in einen zweiten Sprachcodec (C2) transkodiert werden,
- und die mit dem zweiten Sprachcodec (C2) kodierten Sprachdaten (S) an eine zum Steuern der Übertragung der Sprachdaten verwendeten Funksteuerung (BSC) übertragen werden,
**dadurch gekennzeichnet,**
**dass** von der Vorrichtung (V) mit dem zweiten Sprachcodec (C2) an die Funksteuerung (BSC) übertragene Sprachdaten (S) zuerst von einer weiteren Vorrichtung (V') empfangen, in den ersten Sprachcodec (C1) transkodiert und erst danach an die Funksteuerung (BSC) weitergeleitet werden.

3. Verfahren nach Anspruch 1 oder 2, bei dem in der Funksteuerung (BSC) eine weitere Transkodierung der Sprachdaten (S) erfolgt.

4. Verfahren nach einem der vorstehenden Ansprüche, bei dem die mit dem zweiten Sprachcodec (C2) kodierten Sprachdaten (S) zumindest teilweise über eine Luftschnittstelle an die Funksteuerung (BSC) übertragen werden.

5. Vorrichtung (V) mit Mitteln (P) zum Durchführen eines Verfahrens gemäß einem der Ansprüche 1 oder 3 - 4, wenn rückbezogen auf Anspruch 1.

6. Vorrichtung (V) mit Mitteln (P) zum Durchführen eines Verfahrens gemäß einem der Ansprüche 2 oder 3 - 4, wenn rückbezogen auf Anspruch 2.

## Claims

1. Method for operating a device (V) for coding voice data (S) in a radio access network of a radio communication system, in which
- the device (V) receives voice data (S) coded with a first voice codec (C1) from a radio station (BTS),
- the coded voice data (S) are transcoded into a second voice codec (C2) by the device (V),
- and the voice data (S) coded with the second voice codec (C2) are transmitted to a radio controller (BSC) used for controlling the transmission of the voice data,
**characterized in that** the device (V) receives signalling data (SIG) which are transmitted in the radio communication system between the radio controller (BSC) and a subscriber station (MS) connected to the radio station (BTS) via an air interface and/or between the radio controller (BSC) and the radio station (BTS) and are used for specifying the first voice codec (C1) for voice data (S) of the subscriber station (MS), and modifies them in such a manner that the signalling data (SIG) signal the first voice codec (C1) to the subscriber station (MS) and the second voice codec (C2) to the radio controller (BSC).

2. Method for operating a device (V) for coding voice data (S) in a radio access network of a radio communication system, in which
- the device (V) receives voice data (S) coded with a first voice codec (C1) from a radio station (BTS),
- the coded voice data (S) are transcoded into a second voice codec (C2) by the device (V),
- and the voice data (S) coded with the second voice codec (C2) are transmitted to a radio controller (BSC) used for controlling the transmission of the voice data,
**characterized in that** voice data (S) transmitted with the second voice codec (C2) to the radio controller (BSC) from the device (V) are first received by a further device (V'), transcoded into the first voice codec (C1) and are only then forwarded to the radio controller (BSC).

3. Method according to Claim 1 or 2, in which further transcoding of the voice data (S) takes place in the radio controller (BSC) .

4. Method according to one of the preceding claims, in which the voice data (S) coded with the second voice codec (C2) are transmitted to the radio controller (BSC) at least partially via an air interface.

5. Device (V) with means (P) for carrying out a method according to one of Claims 1 or 3 - 4 if referred back to Claim 1.

6. Device (V) with means (P) for carrying out a method according to one of Claims 2 or 3 - 4 if referred back to Claim 2.

## Revendications

1. Procédé d'exploitation d'un dispositif (V) destiné au codage de données vocales (S) dans un réseau d'accès radio d'un système de radiocommunication, dans lequel
- le dispositif (V) reçoit d'une station radio (BTS) des données vocales (S) codées avec un premier codeur-décodeur vocal (C1) ,
- les données vocales (S) codées sont transcodées par le dispositif (V) dans un second codeur-décodeur vocal (C2),
- et les données vocales (S) codées avec le second codeur-décodeur vocal (C2) sont transmises à une radiocommande (BSC) utilisée pour la commande de la transmission des données vocales,
**caractérisé en ce que**
le dispositif (V) reçoit des données de signalisation (SIG) qui sont transmises dans le système de radiocommunication entre la radiocommande (BSC) et une station d'usager (MS) reliée à la station radio (BTS) au moyen d'une interface aérienne et/ou entre la radiocommande entre la radiocommande (BSC) et la station radio (BTS) et sont utilisées pour déterminer le premier codeur-décodeur vocal (C1) pour des données vocales (S) de la station d'usager (MS) et les modifie de telle sorte que les données de signalisation (SIG) signalent le premier codeur-décodeur vocal (C1) à la station d'usager (MS) et le second codeur-décodeur vocal (C2) à la radiocommande (BSC).

2. Procédé d'exploitation d'un dispositif (V) destiné au codage de données vocales (S) dans un réseau d'accès radio d'un système de radiocommunication, dans lequel
- le dispositif (V) reçoit d'une station radio (BTS) des données vocales (S) codées avec un premier codeur-décodeur (C1) ,
- les données vocales (S) codées sont transcodées par le dispositif (V) dans un second codeur-décodeur vocal (C2),
- et les données vocales (S) codées avec le second codeur-décodeur vocal (C2) sont transmises à une radiocommande (BSC) utilisée pour la commande de la transmission de données vocales,
**caractérisé en ce que**
des données vocales (S) transmises par le dispositif (V) avec le second codeur-décodeur vocal (C2) à la radiocommande (BSC) sont reçues d'abord d'un autre dispositif (V'), transcodées dans le premier codeur-décodeur vocal (C1) et sont transmises seulement ensuite à la radiocommande (BSC).

3. Procédé selon la revendication 1 ou 2, dans lequel
un autre transcodage des données vocales (S) intervient dans la radiocommande (BSC) .

4. Procédé selon l'une quelconque des revendications précédentes, dans lequel les données vocales (S) codées avec le second codeur-décodeur vocal (C2) sont transmises au moins en partie par une interface radio à la radiocommande (BSC).

5. Dispositif (V) comprenant des moyens (P) pour la mise en ouvre d'un procédé selon l'une quelconque des revendications 1 ou 3 - 4, si spécifiques à la revendication 1.

6. Dispositif (V) comprenant des moyens (P) pour la mise en oeuvre d'un procédé selon l'une quelconque des revendications 2 ou 3 - 4, si spécifiques à la revendication 2.
